(19) Europäisches Patentamt
European Patent Office
Office européen des brevets

(11) Publication number: **0 282 819 B1**

(12) # EUROPEAN PATENT SPECIFICATION

(45) Date of publication of patent specification: **17.06.92**

(51) Int. Cl.5: **F02M 43/00**, F02D 19/08

(21) Application number: **88103204.9**

(22) Date of filing: **02.03.88**

(54) **Injection system for a dual-fuel engine.**

(30) Priority: **15.03.87 JP 59816/87**

(43) Date of publication of application:
**21.09.88 Bulletin 88/38**

(45) Publication of the grant of the patent:
**17.06.92 Bulletin 92/25**

(84) Designated Contracting States:
**CH DE FR GB LI**

(56) References cited:
**EP-A- 0 064 146**
**US-A- 4 416 229**
**US-A- 4 699 103**

(73) Proprietor: **MITSUBISHI JUKOGYO KABUSHIKI KAISHA**
**5-1, Marunouchi 2-chome Chiyoda-ku**
**Tokyo 100(JP)**

(72) Inventor: **Tateishi, Mataji Nagasaki Technical Institute of**
**Mitsubishi Jukogyo K.K. 1-1, Akunoura-machi**
**Nagasaki-shi Nagasaki-ken(JP)**
Inventor: **Kunimoto, Etsuo Nagasaki Technical Institute of**
**Mitsubishi Jukogyo K.K. 1-1, Akunoura-machi**
**Nagasaki-shi Nagasaki-ken(JP)**
Inventor: **Nakagawa, Hiroshi Nagasaki Technical Institute of**
**Mitsubishi Jukogyo K.K. 1-1, Akunoura-machi**
**Nagasaki-shi Nagasaki-ken(JP)**
Inventor: **Takaishi, Tatsuo Nagasaki Technical Institute of**
**Mitsubishi Jukogyo K.K. 1-1, Akunoura-machi**
**Nagasaki-shi Nagasaki-ken(JP)**

(74) Representative: **Henkel, Feiler, Hänzel & Partner**
**Möhlstrasse 37**
**W-8000 München 80(DE)**

**EP 0 282 819 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION:

Field of the Invention:

The present invention relates to an injection system for a dual-fuel engine.

Description of the Prior Art:

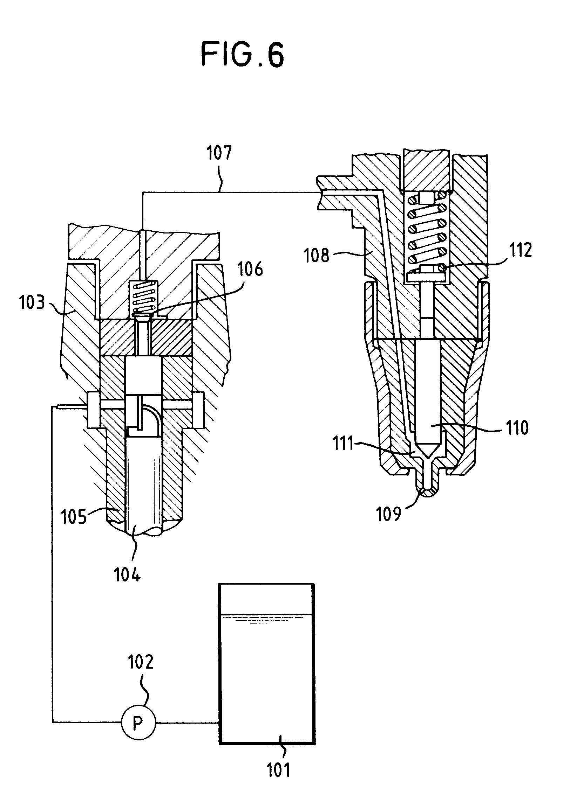

One example of a fuel injection system for a Diesel engine of the heretofore known type is shown in Fig. 6. In this figure, reference numeral 101 designates a fuel tank, numeral 102 designates a fuel feed pump, numeral 103 designates a fuel injection pump main body, numeral 104 designates a plunger in the same fuel injection pump, numeral 105 designates a barrel in the same pump, numeral 106 designates a delivery valve, numeral 107 designates an injection pipe, numeral 108 designates a fuel injection valve main body, numeral 109 designates an injection nozzle in the same fuel injection valve, numeral 110 designates a needle valve in the same, numeral 111 designates a fuel reservoir in the same, and numeral 112 designates a spring in the same.

Since such fuel injection system for a Diesel engine in the prior art was constructed with an object of injecting a single kind of fuel, in order to inject two kinds of fuel it was only the way to mix these two kinds of fuel preliminarily upon feeding of the fuel, and it was impossible to inject the two kinds of fuel as clearly separated from each other during an injection period.

Furthermore, in such fuel injection system in the prior art, there were shortcomings that if hardly self-ignitable fuel such as aromatic oil, lower alcohol, etc., that is, fuel having a low cetane number was used in a Diesel engine, then starting of the engine became difficult, even if the engine should be started, Diesel knocking would arise, and hence continuation of the operation was difficult, and that this resulted in adverse effect upon a life of the engine.

JP-A-61/171874, on which the preamble of claim 1 is based, discloses an injection system comprising a delivery valve in a main fuel injection pump, a control valve for feeding the auxiliary fuel under pressure from a fuel feed pump to a fuel injection valve at an appropriate fuel feed rate and at appropriate fuel feed timing with the aid of a control device, and a check valve provided in a passageway of the auxiliarly fuel. However, this reference does not comprise a pressure regulating check valve. Further, with this known injection system it is impossible to effect a precise adaption of the amount of fuel to the operating conditions of the engine.

US-A-4 416 229 discloses an injection system in which auxiliary fuel is fed by an injection pump similar to the ordinary injection pump. Therefore, in this known injection system it is necessary to provide one more unit of the injection pump which causes inconvenience in the space for fitting and which especially makes it difficult to apply this device to an existing engine.

SUMMARY OF THE INVENTION:

It is therefore one object of the present invention to provide an injection system for a dual-fuel engine which is free from the above-described shortcomings of the heretofore known system, and in which use of hardly self-ignitable fuel (having a low cetane number) can be facilitated.

This object is solved by an injection system for a dual-fuel Diesel engine comprising the features of claim 1.

Since the injection system for a dual-fuel engine according to the present invention is constructed as described above, it can inject hardly self-ignitable fuel and well self-ignitable fuel as clearly separated from each other, and moreover, as the ratio of the injection rates of the two kinds of fuel can be arbitrarily controlled, hardly self-ignitable but cheap fuel can be easily utilized in a Diesel engine.

The above-mentioned and other objects, features and advantages of the present invention will become more apparent by reference to the following description of one preferred embodiment of the present invention taken in conjunction with the accompanying drawings.

BRIEF DESCRIPTION OF THE DRAWINGS:

In the accompanying drawings:

Figs. 1 to 5 are illustration of an injection system according to the present invention;

Fig. 1 is a cross-section view of one preferred embodiment of the invention;

Figs. 2 to 4 are similar cross-section views of the same preferred embodiment showing successive steps in the operation of the injection system; and

Fig. 5 is a diagram showing timing of opening and a period of valve opening of the control valve; and

Fig. 6 is a cross-section view of an injection system in the prior art, corresponding to Fig. 1.

DESCRIPTION OF THE PREFERRED EMBODIMENT:

Now description will be made on one preferred embodiment of the present invention with reference to Figs. 1 to 5. In these figures, reference numeral 1 designates a main fuel (hardly self-ignitable fuel) tank, numeral 2 designates a fuel feed pump for the main fuel, numeral 3 designates a main fuel injection pump main body, numeral 4 designates a plunger in the same fuel injection pump, numeral 5 designates a barrel in the same pump, numeral 6 designates a delivery valve, numeral 7 designates a pressure regulating check valve provided in a bypath, numeral 8 designates a main fuel injection pipe, numeral 40 designates a fuel injection valve, numeral 9 designates a fuel injection valve main body, numeral 10 designates an injection nozzle in the same fuel injection valve, numeral 11 designates a needle valve in the same, numeral 12 designates a fuel reservoir in the same, and numeral 14 designates a spring for pressing the needle valve 11. On the other hand, reference numeral 13 designates a check valve for auxiliary fuel (well self-ignitable fuel), numeral 15 designates an auxiliary fuel injection pipe, numeral 16 designates an auxiliary fuel injection rate control valve, numeral 17 designates an auxiliary fuel feed pipe, numeral 18 designates an auxiliary fuel feed pump, numeral 19 designates an auxiliary fuel tank, and numeral 20 designates a control device for an auxiliary fuel feed amount and auxiliary fuel feed timing. The present embodiment is characterized in that the fuel injection system comprises besides a main fuel feed system, an auxiliary fuel feed system in which a feed amount is controlled by electronic control, and provision is made such that through the fuel injection nozzle 10, at first auxiliary fuel is injected and thereafter main fuel may be injected. More particularly, in the above-mentioned fuel injection valve 40, besides a main fuel passageway 22, an auxiliary fuel passageway 21 having a check valve 13 is provided, and this auxiliary fuel passageway 21 is connected to a fuel outlet of the control valve 16 through the auxiliary fuel injection pipe 15.

In addition, the above-mentioned control valve 16 has its fuel inlet connected to the auxiliary fuel tank 19 via the auxiliary fuel feed pump 18, and also it is connected to the above-referred control device 20 through wires 23. Furthermore, to the above-described control device 20 are input signals sent from a crank angle detector 25, an engine rotational speed detector 26 and a rack position detector 27 of the injection pump 3. The control device 20 determines the timing of opening the control valve 16. More particularly, as shown in Fig. 5 a reference signal for a crank angle sent from the crank angle detector 25 is used as a trigger signal after it has been delayed by a certain delay time Td, and thereby the control valve 16 is operated. Still further, the same control device 20 receives signals issued from the engine rotational speed detector 26 and the injection pump rack position detector 27 applied to its input, and determines a valve opening period To of the control valve 16 depending upon the rotating state of the engine.

Next, description will be made on the operation of the above-described embodiment of the present invention. In Fig. 2, the auxiliary fuel sent from the auxiliary fuel tank 19 as pressurized by the fuel feed pump 18 passes through the pipe 17, and a predetermined amount thereof is fed into the fuel injection valve 9 through the injection pipe 15 during an interruption period of the main fuel injection by means of the control valve 16 whose valve opening timing and valve opening period are controlled by the control device 20 as described above. At this moment, representing the valve-opening pressure of the pressure regulating check valve 7 in the main fuel injection pump 3 by $P_R$ and the valve-opening pressure of the check valve 13 for the auxiliary fuel by $P_P$, by presetting the conditions $P_O > P_R$ and $P_O > P_P$ with respect to the valve-opening pressure $P_O$ of the needle valve 11, the auxiliary fuel fed from the auxiliary fuel tank 19 can pass through the check valve 13 and can flow into the fuel reservoir 12 in the fuel injection valve 9. Consequently, the main fuel 1 existing in this fuel reservoir 12 is pushed back towards the main fuel injection pump 3 through the injection pipe 8, and flows inversely into the plunger chamber as forcibly opening the pressure regulating check valve 7. The amount of the auxiliary fuel can be controlled to be a necessary amount by regulating the timing and period of the opening and closing of the control valve 16 with the aid of the control device 20, and thereby, the fuel reservoir 12 is filled with the auxiliary fuel.

Fig. 3 shows the state just before fuel injection. In this case, all the valves are closed, the auxiliary fuel enters the oil reservoir 12 in the fuel injection valve 9, and the main fuel injection pipe 8 and the subsequent portion is filled with the main fuel (hardly self-ignitable fuel).

Fig. 4 shows the state where the plunger 4 in the main fuel injection pump 3 is rising under the fuel injecting condition, the delivery valve 6 is pushed up and fuel feed commences. In this figure, while the auxiliary fuel fed from the control valve 16 is fed through the injection pipe 8, when the valve-opening period of the control valve terminates, the feed of the auxiliary fuel is finished. On the other hand, the main fuel is sent to the side of the fuel injection valve 9. Thereby the pressure in the oil reservoir 12 of the valve would be raised up to $P_O$ or higher, hence the needle valve 11 opens against the pressing force of the valve spring 14, and fuel injection starts through the injection nozzle 10. At this time, the auxiliary fuel (well self-ignitable fuel) existing in the fuel reservoir 12 is ejected first, and subsequently the main fuel is ejected. It is to be noted that since the auxiliary fuel system is closed at the check valve 13, even if an injection pressure is applied thereto, the auxiliary fuel would not flow reversely.

Owing to the above-described construction and operation of the fuel injection system according to the present invention, well self-ignitable fuel and hardly self-ignitable fuel can be injected successively in this sequence as clearly separated from each other, and therefore, ignition is easy and even hardly self-ignitable fuel can be burnt without generating Diesel nocking. Moreover, a single fuel injection valve can suffice, rise of a cost is little due to single construction, the ratio of amounts of two kinds of fuel can be controlled arbitrarily, and even with hardly self-ignitable fuel, an excellent engine performance can be revealed.

## Claims

**1.** An injection system for a dual-fuel Diesel engine operated by means of main fuel having a low cetane number and auxiliary fuel having a high cetane number comprising:
a delivery valve (6) in a main fuel injection pump, for feeding the main fuel to a fuel injection valve (40)
a control valve (16) for feeding the auxiliary fuel pressurized by a fuel feed pump (18) to said fuel injection valve (40) at an appropriate fuel feed rate and at appropriate fuel feed timing with the aid of a control device (20), and
a check valve (13) provided in the proximity of a fuel reservoir (12) of the fuel injection valve (40) in a flow passageway (21) of said auxiliary fuel,
characterized in that
said injection system includes a pressure regulating check valve (7) provided in parallel to said delivery valve (6) and allowing only a fuel flow in the opposite direction to that in said delivery valve (6),
said control device (20) is applied at its inputs with signals sent from a crank angle detector (25), an engine rotational speed detector (26) and an injection pump rack position detector (27), and said control device (20) controls valve-opening timing of the control valve (16) depending upon the signal sent from the crank angle detector (25) and controls a valve-opening period of the control valve (16) depending upon the signals sent from the engine rotational speed detector (26) and the injection pump rack position detector (27).

**2.** An injection system for a dual-fuel Diesel engine as claimed in claim 1, characterized in that representing the valve-opening pressures of said pressure regulating check valve (7), check valve (13) and fuel injection valve (40), respectively, by $p_R$, $p_P$ and $p_O$, said valve-opening pressures are preset so as to fulfil the relations of $p_R < p_O$ and $p_P < p_O$, and said control device (20) controls in such manner that feed of the auxiliary fuel is effected during the period after injection end of the main fuel injection pump and before the next injection.

## Revendications

**1.** Un système d'injection pour un moteur Diesel à deux carburants, actionné au moyen d'un carburant principal présentant un faible indice de cétane et d'un carburant auxiliaire présentant un fort indice de cétane, comportant :
une vanne d'alimentation (6) dans une pompe d'injection du carburant principal pour délivrer le carburant principal à une vanne (40) d'injection de carburant,
une vanne de commande (16) pour délivrer le carburant auxiliaire mis sous pression par une pompe (18) d'alimentation en carburant à ladite vanne (40) d'injection de carburant suivant un débit approprié de carburant et un rythme approprié d'alimentation en carburant à l'aide d'un dispositif de commande (20), et
une vanne d'arrêt (13) prévue à proximité d'un réservoir de carburant (12) de la vanne (40) d'injection de carburant dans un passage (21) d'écoulement dudit carburant auxiliaire,
caractérisé en ce que
ledit système d'injection comporte une vanne d'arrêt (7) de régulation de pression prévue en parallèle à ladite vanne d'alimentation (6) et ne permettant un écoulement de carburant que dans le sens opposé à celui de la vanne d'alimentation (6),
ledit dispositif de commande (20) reçoit sur ses entrées des signaux envoyés par un détecteur (25) d'angle de vilebrequin, un détecteur (26) de la vitesse de rotation du moteur et un détecteur (27) de la position de la crémaillère de la pompe d'injection, et
ledit dispositif de commande (20) commande le rythme d'ouverture de vanne de la vanne de commande (16) en fonction du signal reçu du détecteur (25) de l'angle de vilebrequin, et commande une période d'ouverture de vanne de la vanne de commande (16) en fonction des signaux envoyés par le détecteur (26) de la vitesse de rotation du moteur et par le détecteur (27) de la position de la crémaillère de la pompe d'injection.

**2.** Un système d'injection pour un moteur Diesel à deux carburants, tel que revendiqué dans la revendication 1, caractérisé en ce que, en représentant les pressions d'ouverture de vanne de ladite vanne d'arrêt (7) de régulation de pression, de la vanne d'arrêt (13) et de la vanne (40) d'injection de carburant respectivement par $p_R$, $p_P$ et $p_O$, lesdites pressions d'ouverture de vanne sont préétablies de manière à satisfaire les relations $p_R < p_O$ et $p_P < p_O$, et ledit système de commande (20) exerce son action de commande de telle manière que la fourniture du carburant auxiliaire est effectuée pendant la période après la fin de l'injection de la pompe d'injection du carburant principal et avant l'injection suivante.

**Patentansprüche**

**1.** Einspritzsystem für einen Zweibrennstoffdieselmotor, der mit einem Hauptbrennstoff niedriger Cetanzahl und Hilfsbrennstoff hoher Cetanzahl betreibbar ist, umfassend:

ein Druckventil (6) in einer Hauptbrennstoff-Einspritzpumpe zum Zuspeisen des Hauptbrennstoffs zu einem Brennstoffeinspritzventil (40),

ein Regelventil (16) zum Zuspeisen des durch eine Brennstoff-Förderpumpe (18) unter Druck gesetzten Hilfsbrennstoffs zum Brennstoffeinspritzventil (40) in einer zweckmäßigen Brennstoff-Fördermenge und zu einem zweckmäßigen BrennstoffFörderzeitpunkt mit Hilfe einer Steuer- oder Regelvorrichtung (20) und

ein in der Nähe eines Brennstoffreservoirs (12) des Brennstoffeinspritzventils(40) in einer Strömungsleitung (21) für Hilfsbrennstoff vorgesehenes Rückschlagventil (13),

dadurch gekennzeichnet, daß

das Einspritzsystem ein parallel zum Druckventil (6) vorgesehenes Druckregel-Rückschlagventil (7), das einen Brennstofffluß nur in der Richtung entgegengesetzt zu dem im Druckventil (6) zuläßt, aufweist,

die Steuer- oder Regelvorrichtung (20) an ihren Eingängen mit von einem Kurbelwinkeldetektor (25), einem Motordrehzahldetektor (26) und einem Einspritzpumpen-Zahnstangenstellungsdetektor (27) gelieferten Signalen beaufschlagbar ist und die Steuer- oder Regelvorrichtung (20) den Ventilöffnungszeitpunkt des Regelventils (16) in Abhängigkeit von dem vom Kurbelwinkeldetektor (25) gelieferten Signal steuert und die Ventilöffnungsperiode des Regelventils (16) in Abhängigkeit von den vom Motordrehzahldetektor (26) und vom Einspritzpumpen-Zahnstangenstellungsdetektor (27) gelieferten Signalen steuert oder einstellt.

**2.** Einspritzsystem für einen Zweibrennstoffdieselmotor nach Anspruch 1, dadurch gekennzeichnet, daß dann, wenn die Ventilöffnungsdrücke des Druckregel-Rückschlagventils (7), des Rückschlagventils (13) und des Brennstoffeinspritzventils (40) jeweils mit $p_R$, $p_P$ bzw. $p_O$ bezeichnet sind oder werden, die Ventilöffnungsdrücke so voreingestellt sind, daß sie den Beziehungen $p_R < p_O$ und $p_P < p_O$ genügen, und die Steuer- oder Regelvorrichtung (20) die Steuerung oder Regelung in der Weise durchführt, daß die Zuspeisung des Hilfsbrennstoffs während der Periode nach dem Einspritzende der Hauptbrennstoff-Einspritzpumpe und vor der nächsten Einspritzung erfolgt.

FIG.1

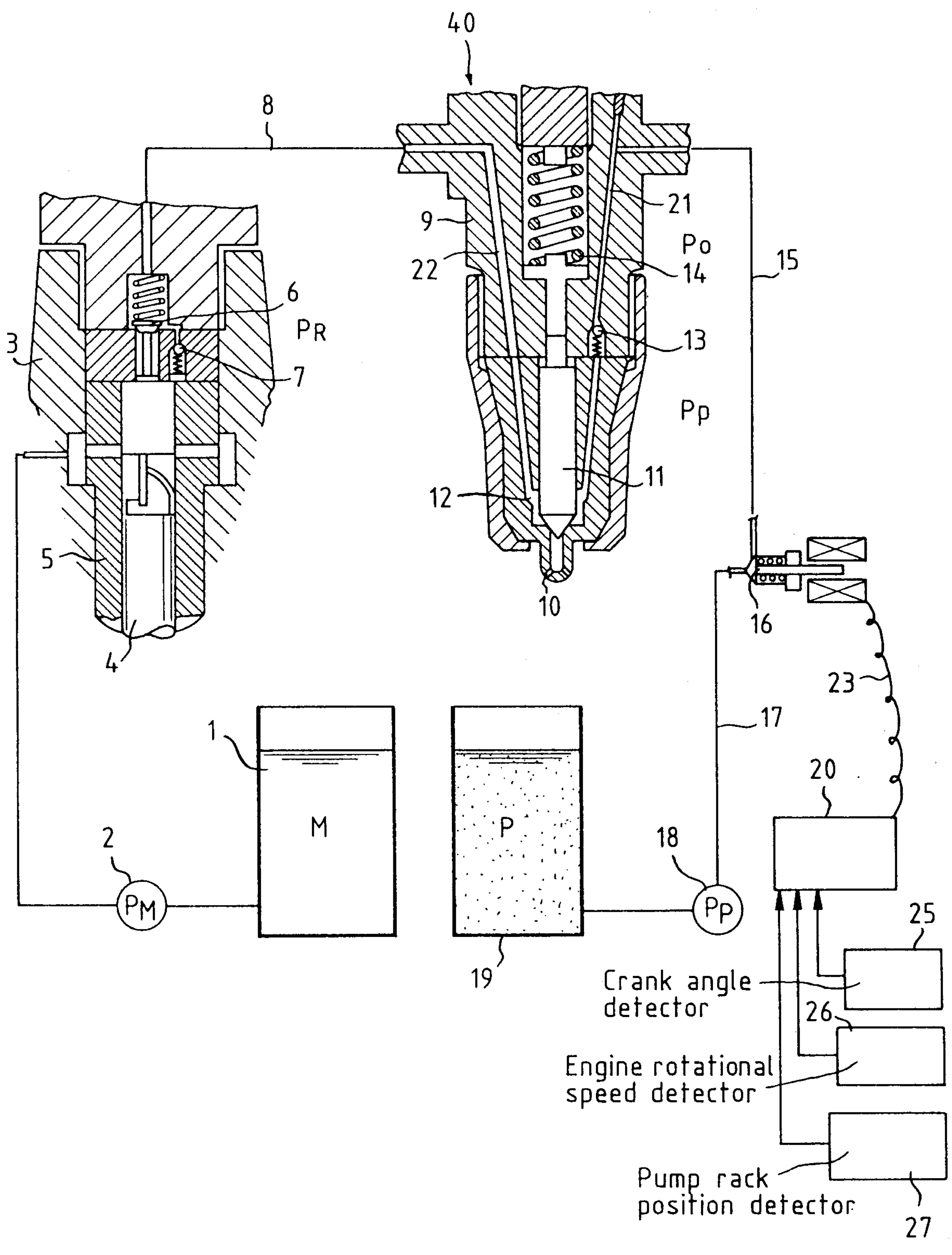
40
8
21
9
22
Po
14
15
6
PR
3
7
13
Pp
11
12
5
10
16
4
23
17
1
20
M
P
2
18
PM
PP
25
19
Crank angle detector
26
Engine rotational speed detector
Pump rack position detector
27

FIG.2

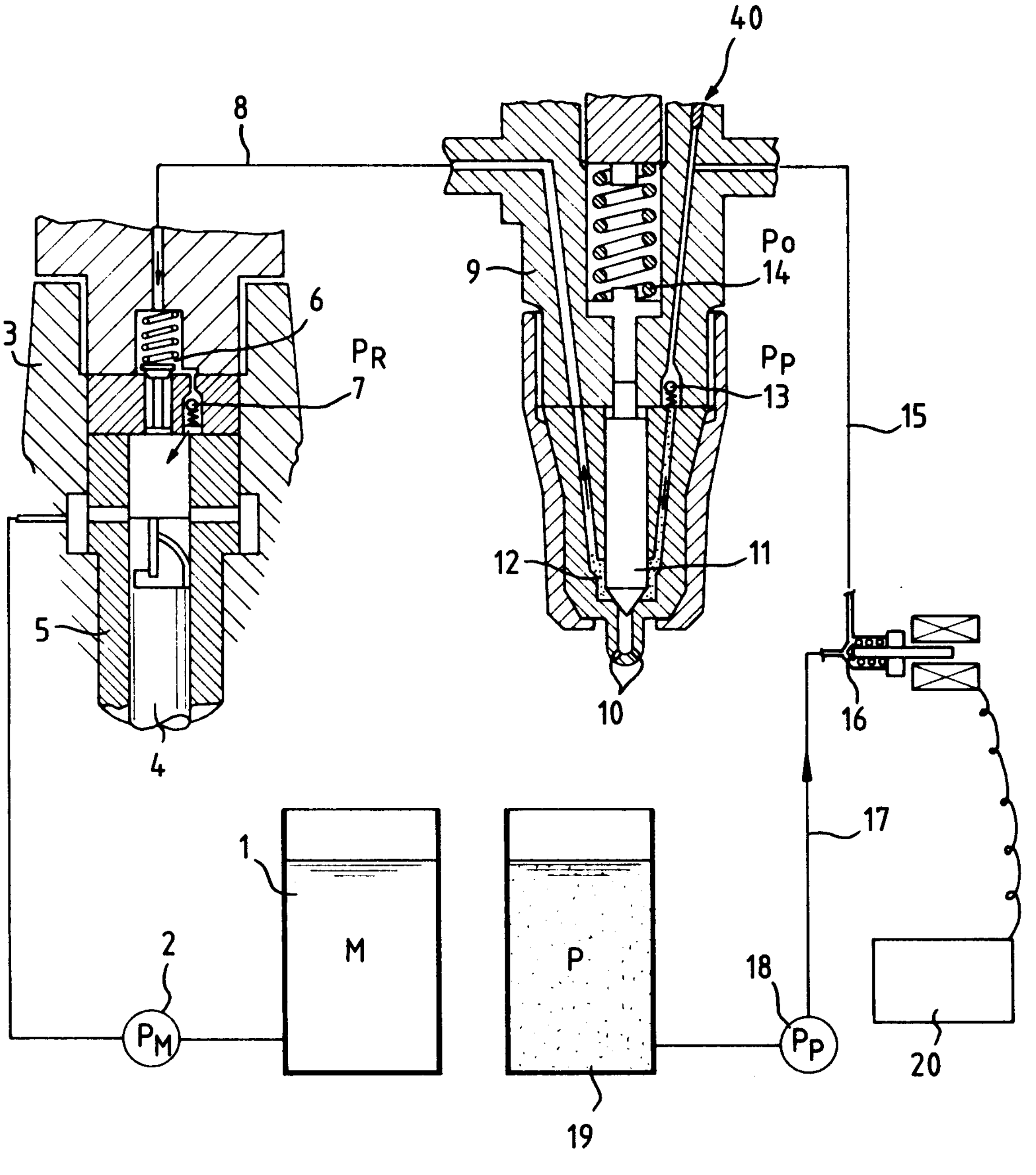

FIG. 3

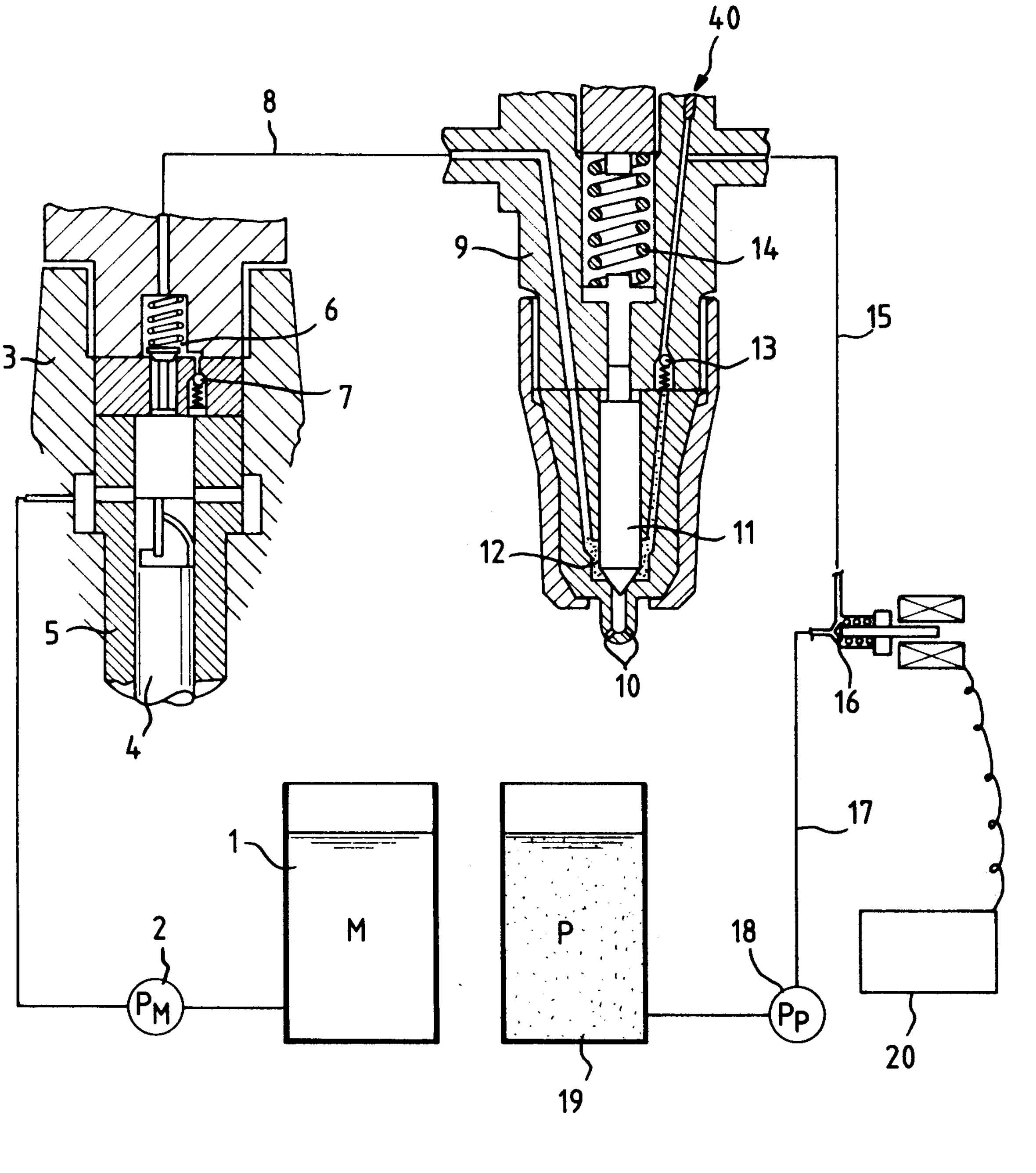

FIG.4

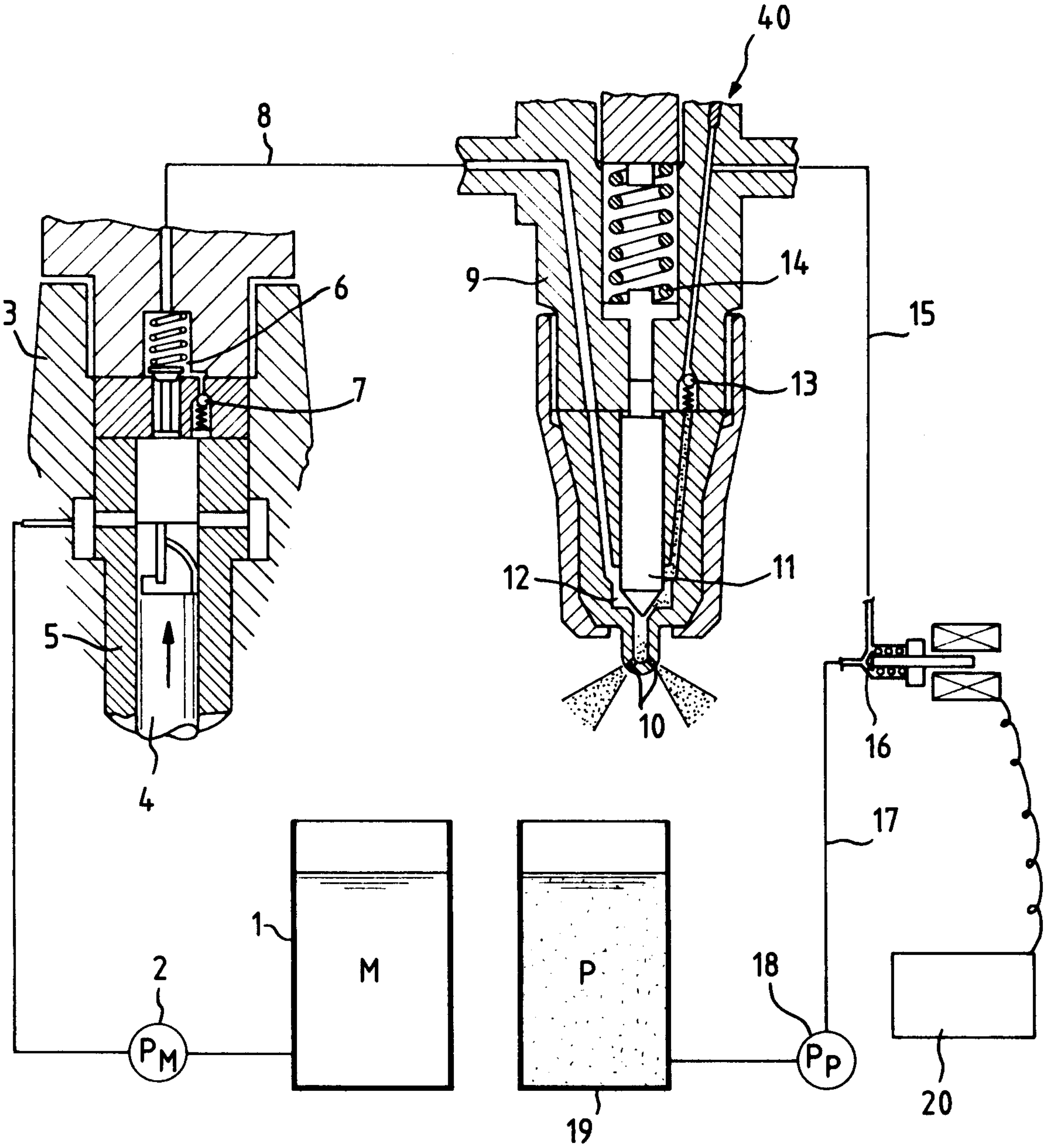

FIG.5

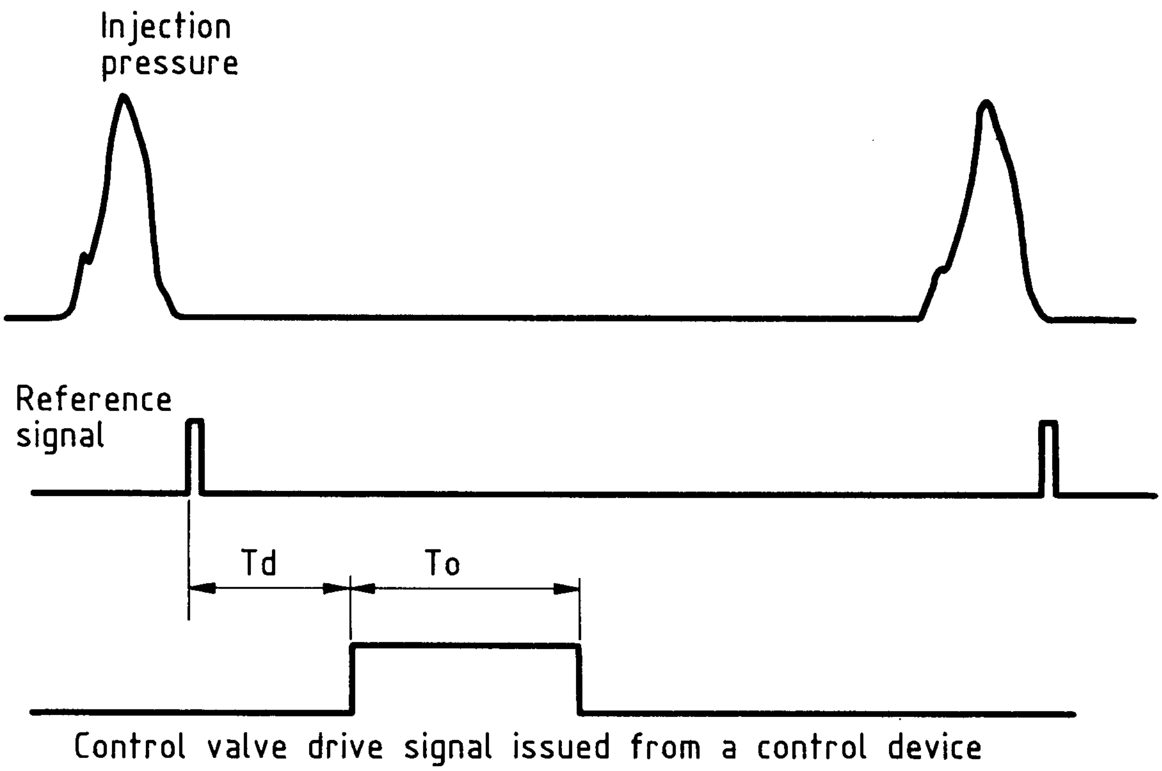
Injection pressure
Reference signal
Td
To
Control valve drive signal issued from a control device

FIG.6